# EUROPEAN PATENT SPECIFICATION

(11) **EP 3 722 796 B1**
(45) Date of publication and mention of the grant of the patent: **03.08.2022**
(21) Application number: 20165700.4
(22) Date of filing: 25.03.2020
(51) Int. Cl.: G01N 27/12

(54) **INTEGRATED, MINIATURIZED, WIRELESS SENSING ELECTRONIC PLATFORM FOR HIGH RESOLUTION GAS SENSING**
INTEGRIERTE, MINIATURISIERTE, DRAHTLOSE SENSORELEKTRONIKPLATTFORM FÜR HOCHAUFLÖSENDE GASSENSOREN
PLATEFORME ÉLECTRONIQUE DE DÉTECTION SANS FIL, MINIATURISÉE ET INTÉGRÉE POUR LA DÉTECTION DE GAZ À HAUTE RÉSOLUTION

(30) Priority: 10.04.2019 US 201962831911 P
(43) Date of publication of application: 14.10.2020
(73) Proprietor: Carrier Corporation, Palm Beach Gardens, FL 33418 (US)
(72) Inventor: PEROULIS, Dimitrios, West Lafayette, IN 47907-2035 (US); JIANG, Xiaofan, West Lafayette, IN 47906 (US)
(74) Representative: Dehns

(56) References cited:
- EP-A1- 0 018 221
- KR-B1- 100 825 717
- US-A- 3 961 900
- US-A- 4 414 839
- US-A1- 2012 247 184

## Description

The present invention relates to an electronic sensing system for detecting a target gas, and a method of detecting a target gas.

Detection of a target gas (e.g., ethylene) is often difficult in the presence of contaminants, such as, for example, carbon dioxide and carbon monoxide.

EP 0018221 A1 discloses a combustibles detector circuit that is operable to provide a quantitative measurement of the amount of combustibles present, wherein the circuit includes a measuring bridge and a reference bridge.

US 2012/247184 discloses a gas detecting apparatus which includes a control circuit for controlling a heating resistor at two different temperatures and a state of a gas is obtained based on a detected output voltage. A gas sensor is also known from KR 100825717 B1 or US 3961900 A.

According to a first aspect of the invention, an electronic sensing system located on a printed circuit board is provided as described by claim 1.

Optionally, the electronic sensing system may include that the system on a chip further includes general purpose input output in electronic communication with the multiplexer.

Optionally, the electronic sensing system may include a humidity sensor configured to detect an on-board humidity of the electronic sensing system.

Optionally, the electronic sensing system may include a temperature sensor configured to detect an on-board temperature of the electronic sensing system.

Optionally, the electronic sensing system may include that the system on a chip further includes an inter-integrated circuit (I2C) in electronic communication with the humidity sensor.

Optionally, the electronic sensing system may include that the system on a chip further includes an I2C in electronic communication with the temperature sensor.

Optionally, the electronic sensing system may include that the system on a chip is configured to adjust the first resistance and the second resistance to compensate for the on-board humidity.

Optionally, the electronic sensing system may include that the system on a chip is configured to adjust the first resistance and the second resistance to compensate for the on-board temperature.

Optionally, the electronic sensing system may include that the system on a chip further includes an I2C in electronic communication with the resistance comparator.

Optionally, the electronic sensing system may include: a low pass filter; an amplifier; and an analog to digital converter, wherein the I2C is in electronic communication with the resistance comparator through the low pass filter, the amplifier, and the analog to digital converter.

Optionally, the electronic sensing system may include that the system on a chip further includes: a communication device configured to advertise a wireless signal.

Optionally, the electronic sensing system may include that the wireless signal is Bluetooth.

Optionally, the electronic sensing system may include that the communication device is configured to transmit the target gas concentration to an external device via the wireless signal.

Optionally, the electronic sensing system may include a thermistor configured to measure an off-board temperature, wherein the system on the chip is configured to adjust the on-board temperature in response to the off-board temperature.

Optionally, the electronic sensing system may include that the target gas is ethylene.

According to a second aspect of the invention, a method of detecting a target gas is provided as described by claim 13.

Optionally, the method may include that prior to the determining the method further includes: detecting an on-board humidity using a humidity sensor; and adjusting the first resistance and the second resistance in response to the on-board humidity to compensate for the on-board humidity.

Optionally, the method may include that prior to the determining the method further includes: detecting an on-board temperature using a temperature sensor; and adjusting the first resistance and the second resistance in response to the on-board temperature to compensate for the on-board temperature.

Optionally, the method may include that prior to the determining the method further includes: detecting an on-board humidity using a humidity sensor; detecting an on-board temperature using a temperature sensor; and adjusting the first resistance and the second resistance in response to the on-board humidity and the on-board temperature to compensate for the on-board humidity and the on-board temperature.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

The following descriptions are provided by way of example only and should not be considered limiting in any way. With reference to the accompanying drawings, like elements are numbered alike:
FIG. 1 illustrates a general schematic system diagram of an electronic sensing system;
FIG. 2 illustrates a general schematic system diagram of an electronic sensing system; and
FIG. 3 is a flow diagram illustrating a method of detecting a target gas using the electronic sensing system of FIGS. 1-2.

A detailed description of one or more embodiments of the disclosed apparatus and method are presented herein by way of exemplification and not limitation with reference to the Figures.

The resistive response of a printed chemo-resistive gas sensor on a flexible substrate may be influenced by contaminants (e.g. other gases such as CO₂ and CO) as well as environmental conditions (e.g. humidity). As a result, real-world environmental conditions need to be carefully calibrated out since they may significantly influence the sensor's readings. Embodiments disclosed herein seek to provide an electronic sensing system capable of calibrating out contaminates to provide an accurate target gas reading.

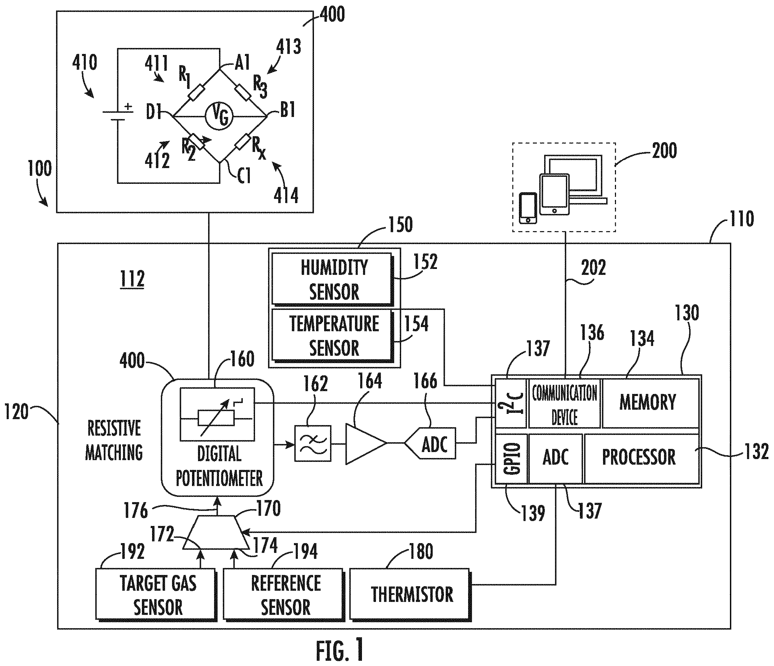

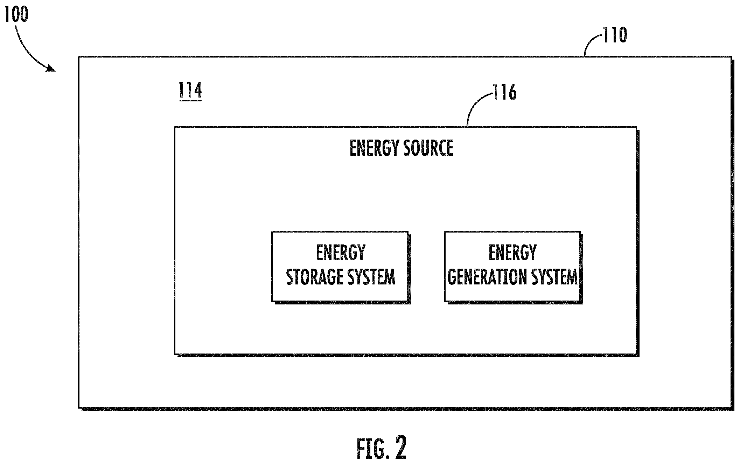

FIGs. 1-2 schematically illustrates an electronic sensing system 100 configured to detect a target gas while adjusting for possible contaminates in the air. It should be appreciated that, although particular systems are separately defined in the schematic block diagrams, each or any of the systems may be otherwise combined or separated via hardware and/or software. The electronic sensing system 100 may be utilized in operative association with a transport refrigeration system, such as, for example, a refrigerated truck, a refrigerated trailer, or a refrigerated container. The electronic sensing system 100 may also be utilized in operative association with a commercial refrigeration system, such as, for example, refrigerated cabinets (e.g., self-serve refrigerated grocery cabinets with and without doors). In the transport refrigeration system or the commercial refrigeration system, the electronic sensing system 100 may be used as part of a refrigeration control system to adjust environmental conditions of the perishable goods (e.g., cargo/stock/inventory) in order to control, or influence the control of, ventilation, humidity, air temperature, and/or contaminant scrubbing systems. Optionally, the electronic sensing system 100 may be used to activate ventilation to lower the target gas concentration around the electronic sensing system 100, or to alert personnel to potential damage to perishable goods.

Optionally, the electronic sensing system 100 may be utilized independent of a corresponding refrigeration system or commercial refrigeration system to alert personnel to potential damage to perishable goods or to increase or decrease ventilation rates.

The electronic sensing system 100 includes a printed circuit board 110 having a first side 112 and a second side 114 opposite the first side 112. The printed circuit board 110 may be composed of multiple layers fiber glass and coper. A majority of the components 120 of the electronic sensing system 100 are located on the first side 112 of the printed circuit board 110 and an energy source 116 is located on the second side 114 of the printed circuit board 110. The energy source 116 is electrically connected to the components 120 on the first side 112 of the printed circuit board 110 and provides electrical energy to the components 120 on the first side 112 of the printed circuit board 110.

The energy source 116 of the electronic sensing system 100 is configured to supply electrical energy to the electronic sensing system 100. The energy source 116 of the electronic sensing system 100 is configured to supply electrical energy to at least one component 120 on the first side 112 of the electronic sensing system 100. The energy source 116 of the electronic sensing system 100 may also be configured to store electrical energy an energy storage system 118, such as, for example, a battery system, capacitor, or other energy storage system known to one of skill in the art. The energy source 116 may also include an energy generation system 119 to generate electrical energy for the electronic sensing system 100. The energy generation system 119 may be an energy generation or electricity harvesting system, such as, for example, solar panel, radio frequency energy harvesting device, or other type of electrical generator known to one of skill in the art.

The electronic sensing system 100 may include a system on a chip 130, a sensor hub 150, a digital potentiometer 160, and a thermistor 180. The system on a chip 130 may comprise a processor 132, a memory 134, a communication device 136, an analog to digital convertor (ADC) 137, I²C 138, and a general purpose input output (GPIO). Optionally, the processor 132 may be a 32 bit reduced instruction set computer processor. Optionally, the memory 134 is a 512 kB flash memory. The ADC 137 may be a 12 bit ADC. Optionally, the communication device 136 may be a 2.4 GHZ radio. The communication device 136 may be capable of transmitting wireless signals 202 to an external device 200. The wireless signals 202 may be long-range wireless (e.g., LORA) or short-range wireless (e.g., Bluetooth). The communication device 136 may be configured to transmit a target gas concentration to the external device 200 via the wireless signal 202.

The external device 200 may be a computing device capable of doing real-time analysis, such as, for example, a desktop computer, a laptop computing, a tablet computer, a smart phone, a smart watch, or similar computing device known to one of skill in the art. Although not shown for simplification, the external device 200 may include a processor and an associated memory comprising computer-executable instructions that, when executed by the processor, cause the processor to perform various operations. The processor may be, but is not limited to, a single-processor or multi-processor system of any of a wide array of possible architectures, including field programmable gate array (FPGA), central processing unit (CPU), application specific integrated circuits (ASIC), digital signal processor (DSP) or graphics processing unit (GPU) hardware arranged homogenously or heterogeneously. The memory may be but is not limited to a random access memory (RAM), read only memory (ROM), or other electronic, optical, magnetic or any other computer readable medium.

The ADC 137 may electrically connect the system on a chip 130 to the thermistor 180. The thermistor 180 is configured to measure the external temperature of the electronic sensing system 100. The thermistor 180 may be a negative temperature coefficient (NTC) temperature-sensing elements that are off board (connected to the actual printed chemo-resistive gas sensor via wires) to measure the temperature of the sensor for calibration. The thermistor 180 may be configured to measure an off-board temperature. Whereas the temperature sensor 154 may be mounted on the printed circuit board 110 and may be used for measuring a temperature of the printed circuit board 110 for compensating thermal drift of the onboard electrical components.

The I²C 138 may electrically connect the system on a chip 130 to the on-board sensor hub 150. The on-board sensor hub 150 may include a humidity sensor 152 and a temperature sensor 154. The humidity sensor 152 is configured to detect on-board humidity of air proximate and/or within the electronic sensing system 100. The temperature sensor 154 is configured to detect on-board temperature of air proximate and /or within the electronic sensing system 100.

The GPIO 139 may electrically connect the system on a chip 130 to a multiplexer 170 having two inputs 172, 174 and one output 176. The two inputs of the multiplexer 170 may be a target gas sensor 192 and a reference sensor 194. The target gas sensor 192 is configured to detect a target gas. The target gas may be organic gas molecules or inorganic gas molecules. Organic gas molecules may include, but are not limited to, ethylene, formaldehyde, methane, propene, any particular or total volatile organic compound (VOC) count, any particular or total alcohol count, any particular or total aromatic compound count,...etc. Inorganic gas molecules may include, but are not limited to, O₂, CO, CO₂, ammonia (NH₃), SH₂,...etc. Optionally, the target gas may be ethylene. The target gas sensor 192 and the reference sensor 194 may be similar. For example the reference sensor 194 is a similar printed chemo-resistive sensor to the target gas sensor 192 but without the gas sensing chemicals included in the target gas sensor 192. The reference sensor 194 may have a similar response to a contaminant (e.g., CO and CO2) with the target gas sensor 192 but the reference sensor 194 will have no response to the target gas. Therefore, a reading from the reference sensor 192 could be used for eliminating the influence caused by a contaminant (CO and CO2).

The target gas sensor 192 is electrically connected to the multiplexer 170 through a first port 172 and the reference senor 194 is electrically connected to the multiplexer 170 through a second port 174. The output 176 of the multiplexer 170 is electrically connected to a digital potentiometer 160 and the digital potentiometer 160 may be electrically connected to the I²C 138 through a low pass filter 162, an amplifier 164, and an analog to digital converter 166.

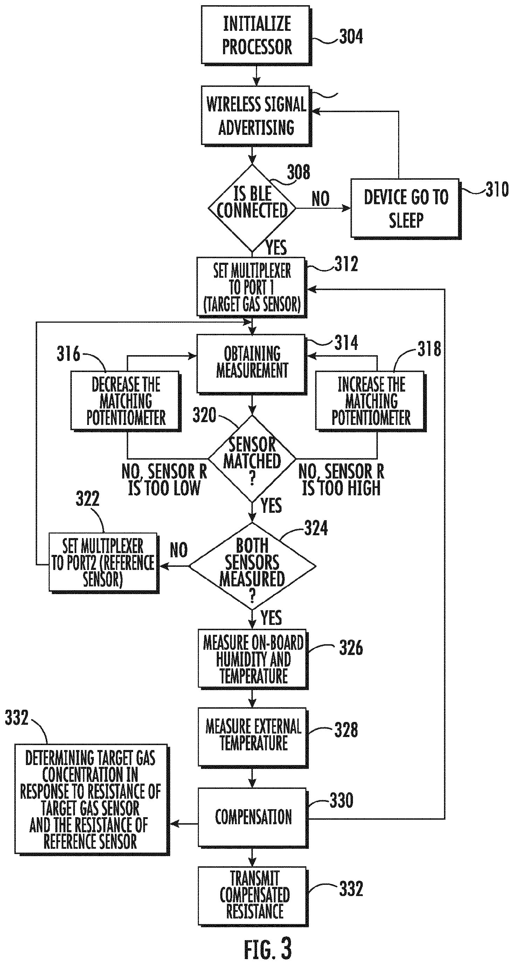

The digital potentiometer 160 may be a second resistor 412 within a resistance comparator 400. The resistance comparator may be a Wheatstone bridge, a Kelvin bridge, an ohm meter, or any similar device known to one of skill in the art. Optionally, the resistance comparator 400 may be a Wheatstone bridge. The resistance comparator may comprise a power source 410, first junction A1, a second junction C1, a first mid-junction B1, a second mid-junction D1, a first resistor 411, a second resistor 412, a third resistor 413, a fourth resistor 414, and a galvanometer 420. The first resistor 411 may have a known resistance of R₁. The second resistor 412 may have a known resistance of R₂. The third resistor 413 may have a known resistance of R₃. The fourth resistor 414 may have an unknown resistance of R_{X}. The target gas sensor 192 may be the fourth resistor 414 of the resistance comparator 400. The resistance comparator 400 may be used to adjust the resistance R₂ of the second resistor 412 (i.e., the digital potentiometer 160) such that the resistance R₂ of the second resistor 412 (i.e., the digital potentiometer 160) matches the resistance Rₓ of the fourth resistor (i.e., the target gas sensor 192) as close as possible. Until the resistance R₂ of the second resistor 412 (i.e., the digital potentiometer 160) matches the resistance Rₓ of the fourth resistor (i.e., the target gas sensor 192) the galvanometer 420 may produce a voltage VG, which may be amplified by the amplifier 164 to more precisely adjust the resistance R₂ of the second resistor 412 (i.e., the digital potentiometer 160). Referring now to FIG. 3, with continued reference to FIGS. 1-2, a method, more precisely a flow chart of a method 300 of detecting a target gas, is illustrated . Optionally, the target gas may be ethylene. Optionally, the method 300 is performed by the electronic sensing system 100. At block 304, the processor 132 is initialized and the method 300 is initiated

At block 306, the communication device 136 initiates advertisement of the wireless signal 202. The communication device 136 may be configured to continuously advertise a wireless signal 202 once imitated at block 306. The advertisement is the communication device 136 declaring its presence to any nearby listening external device 200 and if it is a connectable advertisement it is an opportunity for external device 200 to connect to the communication device 136. For example, the wireless signal 202 of the communication device 136 may be a Bluetooth signal. The external device 200 is configured to detect the wireless signal 202 and connect to the communication device 136. At block 308, it is determined whether the communication device 136 has connected to an external device 200 via the wireless signal 202. If at block 308, it is determined that the communication device 136 has not connected to an external device 200 via the wireless signal 202 then the method 300 moves to block 310 and the processor 132, the ADC 137, the sensor hub 150, and the thermistor 180 go to sleep. If at block 308, it is determined that the communication device 136 has connected to an external device 200 via the wireless signal 202 then the method 300 moves to block 312 and the multiplexer 170 is set to a first port 172 that is in electric communication with the target gas sensor 192.

At block 314, a target gas measurement is obtained using the target gas sensor 192 through the ADC 166. The target gas measurement is detected by the target gas sensor 192 through a resistance measurement taken by the target gas sensor 192. The resistance measurement of the target gas sensor 192 will change if the target gas concentration has changed.

At block 320, it is determined whether the resistance of the target gas sensor 192 captured during the target gas measurement is matched to with a resistance of the digital potentiometer 160. If at block 320, the resistance of the target gas sensor 192 captured during the target gas measurement is matched then the method 300 moves to block 320. If at block 320, the resistance of the target gas sensor 192 captured during the target gas measurement is not matched then the method 300 moves to block 316 if the resistance is too low or to block 318 if the resistance is too high. At block 318, the digital potentiometer 160 is increased if the resistance is too high. At block 316, the digital potentiometer 160 is decreased if the resistance is too low.

Once the resistance of the target gas sensor 192 captured during the target gas measurement is matched at block 320 the method 300 then moves onto block 322 to check whether the reference sensor 194 is matched with a resistance of the digital potentiometer 160. At block 322, the multiplexer 170 is set to a second port 174 that is in electric communication with the reference sensor 194.

At block 314, a measurement is obtained using the ADC 166 and the reference sensor 194. The measurement is detected by the reference sensor 194 through a resistance measurement taken by the reference sensor 194.

At block 320, it is determined whether the resistance of the reference sensor 194 captured during the reference measurement is matched to the resistance of the digital potentiometer 160. If at block 320, the resistance of the reference sensor 194 captured during the reference measurement is matched then the method 300 moves to block 320. If at block 320, the resistance of the reference sensor 194 captured during the reference measurement is not matched then the method 300 moves to block 316 if the resistance is too low or to block 318 if the resistance is too high. At block 318, the digital potentiometer 160 is increased if the resistance is too high. At block 316, the digital potentiometer 160 is decreased if the resistance is too low.

Once the resistance of the reference sensor 194 captured during the reference measurement is matched at block 320 the method 300 then moves onto block 322 where both resistance of the reference sensor 194 and the resistance of the target gas sensor 192 should be now both be matched. At block 326, the on-board humidity is measured by the humidity sensor 152 and the on-board temperature is measured by the temperature sensor 154. The reference sensor 194 and the target gas sensor 192 should respond the same to humidity and temperature changes.

At block 328, the external temperature is measured by the thermistor 180.

At block 330, a compensation is applied to the resistance captured by the target gas sensor 192 and the resistance captured by the reference sensor 194. Both the target gas sensor 192 and the reference sensor 194 are pre-calibrated based on the on-board humidity measured by the humidity sensor 152, the on-board temperature measured by the temperature sensor 154 and the external temperature measured by the thermistor 180. Ideally the reference sensor 194 and the target gas sensor 192 should have the same response to humidity and temperature but may differ in real life due to the effects of the sensing chemicals and the fact that the printed substrates may not be exactly identical. From testing, the resistance response of the reference sensor 194 and the target gas sensor 192 with humidity and temperature may often be much higher than the resistance response of the reference sensor 194 and the target gas sensor 192 to the target gas. Therefore it may be necessary to compensate the readings of the reference sensor 194 and the target gas sensor 192 by the humidity detected by the humidity sensor 152 and the temperature detected by the temperature sensor 154.

At block 332, the compensated resistance is then transmitted back to the external device 200 and the method may move back to block 312 to capture more resistance measurements.

At block 334, the target gas concentration is determined in response to the resistance of the target gas sensor 194 and the resistance of the reference sensor 194. For example, since the reference sensor 194 detects contaminates but not the target gas, while the target gas sensor 194 detects the target gas and contaminates, the combination of the resistance of the target gas sensor 194 and the resistance of the reference sensor 194 may be used to determine resistance. The resistance of the target gas sensor 192 used in determining the target gas concentration may be the compensated resistance, as described in block 330. The resistance of the reference sensor 194 used in determining the target gas concentration may be the compensated resistance, as described in block 330.

While the above description has described the flow processes of FIG. 3 in a particular order, it should be appreciated that unless otherwise specifically required in the attached claims that the ordering of the steps may be varied.

As described above, embodiments can be in the form of processor-implemented processes and devices for practicing those processes, such as a processor. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes an device for practicing the embodiments. When implemented on a general-purpose microprocessor, the computer program code segments configure the microprocessor to create specific logic circuits.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

## Claims

1. An electronic sensing system (100) for detecting a target gas, the electronic sensing system comprising:
a target gas sensor (192) configured to detect a resistance of the target gas sensor;
a reference sensor (194) configured to detect a resistance of the reference sensor;
a resistance comparator (400) including a potentiometer (160), the resistance comparator being electrically connected to the target gas sensor and the reference sensor, wherein the potentiometer is configured to be adjusted to determine a first resistance in response to the resistance of the target gas sensor and a second resistance in response to the resistance of the reference sensor;
a system on a chip (130) in electronic communication with the resistance comparator, the system on a chip being configured to determine a target gas concentration in response to the first resistance and the second resistance;
a multiplexer (170) electrically connecting the resistance comparator (400) to the target gas sensor (192) and the reference sensor (194), wherein the multiplexer comprises: a first port (172) electrically connected to the target gas sensor, a second port (174) electrically connected to the reference sensor, and an output port (176) electrically connected to the resistance comparator; and
an energy source (116),
**characterized in that** the electronic sensing system (100) further comprises:
a printed circuit board (110) having a first side (112) and a second side (114) opposite the first side; and **in that**
the potentiometer (160) is a digital potentiometer; and
a majority of components (120) of the electronic sensing system (100) are located on the first side (112) of the printed circuit board (110) and the energy source is located on the second side (114), the energy source being electrically connected to components (120) on the first side (112) of the printed circuit board (110) and being configured to provide electrical energy to at least one of the components (120) on the first side of the printed circuit board.

2. The electronic sensing system (100) of claim 1, wherein the system on a chip (130) further comprises general purpose input output in electronic communication with the multiplexer.

3. The electronic sensing system (100) of claim 1 or 2, further comprising:
a humidity sensor (152) configured to detect an on-board humidity of the electronic sensing system.

4. The electronic sensing system (100) of any preceding claim, further comprising:
a temperature sensor (154) configured to detect an on-board temperature of the electronic sensing system.

5. The electronic sensing system (100) of claim 3, wherein the system on a chip (130) further comprises an inter-integrated circuit (I²C) in electronic communication with the humidity sensor (152).

6. The electronic sensing system (100) of claim 3 or 5, wherein the system on a chip (130) is configured to adjust the first resistance and the second resistance to compensate for the on-board humidity.

7. The electronic sensing system (100) of claim 4, wherein the system on a chip (130) further comprises an I²C in electronic communication with the temperature sensor (154), and/or wherein the system on a chip is configured to adjust the first resistance and the second resistance to compensate for the on-board temperature.

8. The electronic sensing system (100) of any preceding claim, wherein the system on a chip (130) further comprises an I²C in electronic communication with the resistance comparator (400).

9. The electronic sensing system (100) of claim 8, further comprising:
a low pass filter (162);
an amplifier (164); and
an analog to digital converter (166),
wherein the I²C is in electronic communication with the resistance comparator through the low pass filter, the amplifier, and the analog to digital converter.

10. The electronic sensing system (100) of any preceding claim, wherein the system on a chip (130) further comprises:
a communication device (136) configured to advertise a wireless signal (202), optionally:
wherein the wireless signal is Bluetooth and/or wherein the communication device is further configured to transmit the target gas concentration to an external device via the wireless signal.

11. The electronic sensing system (100) of claim 5, further comprising:
a thermistor (180) configured to measure an off-board temperature, wherein the system on the chip (130) is configured to adjust the on-board temperature in response to the off-board temperature.

12. The electronic sensing system (100) of any preceding claim, wherein the target gas is ethylene.

13. A method of detecting a target gas using the electronic sensing system (100) of any preceding claim, the method comprising:
detecting a resistance of a target gas sensor (192);
detecting a resistance of a digital potentiometer (160);
adjusting the resistance of the digital potentiometer to a first resistance such that the first resistance of the digital potentiometer is matched to the resistance of the target gas sensor;
detecting a resistance of a reference sensor (194);
adjusting the resistance of the digital potentiometer to a second resistance such that the second resistance of the digital potentiometer is matched to the resistance of the target gas sensor; and
determining target gas concentration in response to the first resistance and the second resistance.

14. The method of claim 13, wherein prior to the determining the method further comprises:
detecting an on-board humidity using a humidity sensor (152); and
adjusting the first resistance and the second resistance in response to the on-board humidity to compensate for the on-board humidity, and/or
detecting an on-board temperature using a temperature sensor (154); and
adjusting the first resistance and the second resistance in response to the on-board temperature to compensate for the on-board temperature.

15. The method of claim 13 or 14, wherein prior to the determining the method further comprises:
detecting an on-board humidity using a humidity sensor (152);
detecting an on-board temperature using a temperature sensor (154); and
adjusting the first resistance and the second resistance in response to the on-board humidity and the on-board temperature to compensate for the on-board humidity and the on-board temperature.

## Patentansprüche

1. Elektronisches Erfassungssystem (100) zum Detektieren eines Zielgases, das elektronische Erfassungssystem umfassend:
einen Zielgassensor (192), der zum Detektieren eines Widerstands des Zielgassensors ausgelegt ist;
einen Referenzsensor (194), der zum Detektieren eines Widerstands des Referenzsensors ausgelegt ist;
einen Widerstandskomparator (400), einschließlich eines Potentiometers (160), wobei der Widerstandskomparator elektrisch mit dem Zielgassensor und dem Referenzsensor verbunden ist, wobei das Potentiometer dazu ausgelegt ist, zum Bestimmen eines ersten Widerstands als Reaktion auf den Widerstand des Zielgassensors und eines zweiten Widerstands als Reaktion auf den Widerstand des Referenzsensors eingestellt zu werden;
ein System-on-α-Chip (130) in elektronischer Kommunikation mit dem Widerstandskomparator, wobei das System-on-α-Chip zum Bestimmen einer Zielgaskonzentration als Reaktion auf den ersten Widerstand und den zweiten Widerstand ausgelegt ist;
einen Multiplexer (170), der den Widerstandskomparator (400) elektrisch mit dem Zielgassensor (192) und dem Referenzsensor (194) verbindet, wobei der Multiplexer umfasst: einen ersten Anschluss (172), der elektrisch mit dem Zielgassensor verbunden ist, einen zweiten Anschluss (174), der elektrisch mit dem Referenzsensor verbunden ist, und einen Ausgangsanschluss (176), der elektrisch mit dem Widerstandskomparator verbunden ist; und
eine Energiequelle (116),
**dadurch gekennzeichnet, dass** das elektronische Erfassungssystem (100) weiter umfasst:
eine gedruckte Leiterplatte (110) mit einer ersten Seite (112) und einer zweiten Seite (114) gegenüber der ersten Seite; und dadurch, dass
das Potentiometer (160) ein digitales Potentiometer ist und
sich ein Großteil von Komponenten (120) des elektronischen Erfassungssystems (100) auf der ersten Seite (112) der gedruckten Leiterplatte (110) befindet und sich die Energiequelle auf der zweiten Seite (114) befindet, wobei die Energiequelle elektrisch mit Komponenten (120) auf der ersten Seite (112) der gedruckten Leiterplatte (110) verbunden ist und zum Bereitstellen von elektrischer Energie an zumindest eine der Komponenten (120) auf der ersten Seite der gedruckten Leiterplatte ausgelegt ist.

2. Elektronisches Erfassungssystem (100) nach Anspruch 1, wobei das System-on-a-Chip (130) weiter einen Universaleingang/-ausgang in elektronischer Kommunikation mit dem Multiplexer umfasst.

3. Elektronisches Erfassungssystem (100) nach Anspruch 1 oder 2, weiter umfassend: einen Feuchtigkeitssensor (152), der zum Detektieren einer internen Feuchtigkeit des elektronischen Erfassungssystems ausgelegt ist.

4. Elektronisches Erfassungssystem (100) nach einem der vorstehenden Ansprüche, weiter umfassend:
einen Temperatursensor (154), der zum Detektieren einer internen Temperatur des elektronischen Erfassungssystems ausgelegt ist.

5. Elektronisches Erfassungssystem (100) nach Anspruch 3, wobei das System-on-a-Chip (130) weiter eine Inter-Integrated Circuit (I²C) in elektronischer Kommunikation mit dem Feuchtigkeitssensor (152) umfasst.

6. Elektronisches Erfassungssystem (100) nach Anspruch 3 oder 5, wobei das System-on-a-Chip (130) zum Einstellen des ersten Widerstands und des zweiten Widerstands zum Ausgleichen der internen Feuchtigkeit ausgelegt ist.

7. Elektronisches Erfassungssystem (100) nach Anspruch 4, wobei das System-on-a-Chip (130) weiter eine I²C in elektronischer Kommunikation mit dem Temperatursensor (154) umfasst und/oder wobei das System-on-α-Chip zum Einstellen des ersten Widerstands und des zweiten Widerstands zum Ausgleichen der internen Temperatur ausgelegt ist.

8. Elektronisches Erfassungssystem (100) nach einem der vorstehenden Ansprüche, wobei das System-on-α-Chip (130) weiter eine I²C in elektronischer Kommunikation mit dem Widerstandskomparator (400) umfasst.

9. Elektronisches Erfassungssystem (100) nach Anspruch 8, weiter umfassend:
ein Tiefpassfilter (162);
einen Verstärker (164) und
einen Analog-Digital-Wandler (166),
wobei die I²C durch das Tiefpassfilter, den Verstärker und den Analog-Digital-Wandler in elektronischer Kommunikation mit dem Widerstandskomparator ist.

10. Elektronisches Erfassungssystem (100) nach einem der vorstehenden Ansprüche, wobei das System-on-α-Chip (130) weiter umfasst:
eine Kommunikationsvorrichtung (136), die zum Ankündigen eines drahtlosen Signals (202) ausgelegt ist, optional:
wobei das drahtlose Signal Bluetooth ist und/oder wobei die Kommunikationsvorrichtung weiter zum Übertragen der Zielgaskonzentration über das drahtlose Signal an eine externe Vorrichtung ausgelegt ist.

11. Elektronisches Erfassungssystem (100) nach Anspruch 5, weiter umfassend:
einen Thermistor (180), der zum Messen einer externen Temperatur ausgelegt ist, wobei das System-on-the-Chip (130) zum Einstellen der internen Temperatur als Reaktion auf die externe Temperatur ausgelegt ist.

12. Elektronisches Erfassungssystem (100) nach einem der vorstehenden Ansprüche, wobei das Zielgas Ethylen ist.

13. Verfahren zum Detektieren eines Zielgases unter Verwendung des elektronischen Erfassungssystems (100) nach einem der vorstehenden Ansprüche, das Verfahren umfassend:
Detektieren eines Widerstands eines Zielgassensors (192);
Detektieren eines Widerstands eines digitalen Potentiometers (160);
Einstellen des Widerstands des digitalen Potentiometers auf einen ersten Widerstand derart, dass der erste Widerstand des digitalen Potentiometers auf den Widerstand des Zielgassensors abgestimmt ist;
Detektieren eines Widerstands eines Referenzsensors (194);
Einstellen des Widerstands des digitalen Potentiometers auf einen zweiten Widerstand derart, dass der zweite Widerstand des digitalen Potentiometers auf den Widerstand des Zielgassensors abgestimmt ist; und
Bestimmen einer Zielgaskonzentration als Reaktion auf den ersten Widerstand und den zweiten Widerstand.

14. Verfahren nach Anspruch 13, wobei vor dem Bestimmen das Verfahren weiter umfasst:
Detektieren einer internen Feuchtigkeit unter Verwendung eines Feuchtigkeitssensors (152) und
Einstellen des ersten Widerstands und des zweiten Widerstands als Reaktion auf die interne Feuchtigkeit zum Ausgleichen der internen Feuchtigkeit und/oder
Detektieren einer internen Temperatur unter Verwendung eines Temperatursensors (154) und
Einstellen des ersten Widerstands und des zweiten Widerstands als Reaktion auf die interne Temperatur zum Ausgleichen der internen Temperatur.

15. Verfahren nach Anspruch 13 oder 14, wobei vor dem Bestimmen das Verfahren weiter umfasst:
Detektieren einer internen Feuchtigkeit unter Verwendung eines Feuchtigkeitssensors (152);
Detektieren einer internen Temperatur unter Verwendung eines Temperatursensors (154) und
Einstellen des ersten Widerstands und des zweiten Widerstands als Reaktion auf die interne Feuchtigkeit und die interne Temperatur zum Ausgleichen der internen Feuchtigkeit und der internen Temperatur.

## Revendications

1. Système électronique de détection (100) pour détecter un gaz cible, le système électronique de détection comprenant :
un capteur de gaz cible (192) configuré pour détecter une résistance du capteur de gaz cible ;
un capteur de référence (194) configuré pour détecter une résistance du capteur de référence ;
un comparateur de résistance (400) incluant un potentiomètre (160), le comparateur de résistance étant connecté électriquement au capteur de gaz cible et au capteur de référence, dans lequel le potentiomètre est configuré pour être ajusté pour déterminer une première résistance en réponse à la résistance du capteur de gaz cible et une seconde résistance en réponse à la résistance du capteur de référence ;
un système sur une puce (130) en communication électronique avec le comparateur de résistance, le système sur une puce étant configuré pour déterminer une concentration en gaz cible en réponse à la première résistance et à la seconde résistance ;
un multiplexeur (170) connectant électriquement le comparateur de résistance (400) au capteur de gaz cible (192) et au capteur de référence (194), dans lequel le multiplexeur comprend: un premier port (172) connecté électriquement au capteur de gaz cible, un second port (174) connecté électriquement au capteur de référence, et un port de sortie (176) connecté électriquement au comparateur de résistance ; et
une source d'énergie (116),
**caractérisé en ce que** le système électronique de détection (100) comprend en outre :
une carte de circuit imprimé (110) présentant un premier côté (112) et un second côté (114) opposé au premier côté ; et **en ce que**
le potentiomètre (160) est un potentiomètre numérique ; et
une majorité de composants (120) du système électronique de détection (100) sont situés sur le premier côté (112) de la carte de circuit imprimé (110) et la source d'énergie est située sur le second côté (114), la source d'énergie étant connectée électriquement aux composants (120) sur le premier côté (112) de la carte de circuit imprimé (110) et étant configurée pour fournir une énergie électrique à au moins l'un des composants (120) sur le premier côté de la carte de circuit imprimé.

2. Système électronique de détection (100) selon la revendication 1, dans lequel le système sur une puce (130) comprend en outre une entrée-sortie universelle en communication électronique avec le multiplexeur.

3. Système électronique de détection (100) selon la revendication 1 ou 2, comprenant en outre : un capteur d'humidité (152) configuré pour détecter une humidité interne du système électronique de détection.

4. Système électronique de détection (100) selon une quelconque revendication précédente, comprenant en outre :
un capteur de température (154) configuré pour détecter une température interne du système électronique de détection.

5. Système électronique de détection (100) selon la revendication 3, dans lequel le système sur une puce (130) comprend en outre un circuit inter-intégré (I²C) en communication électronique avec le capteur d'humidité (152).

6. Système électronique de détection (100) selon la revendication 3 ou 5, dans lequel le système sur une puce (130) est configuré pour ajuster la première résistance et la seconde résistance pour compenser l'humidité interne.

7. Système électronique de détection (100) selon la revendication 4, dans lequel le système sur une puce (130) comprend en outre un I²C en communication électronique avec le capteur de température (154), et/ou dans lequel le système sur une puce est configuré pour ajuster la première résistance et la seconde résistance pour compenser la température interne.

8. Système électronique de détection (100) selon une quelconque revendication précédente, dans lequel le système sur une puce (130) comprend en outre un I²C en communication électronique avec le comparateur de résistance (400).

9. Système électronique de détection (100) selon la revendication 8, comprenant en outre :
un filtre passe-bas (162) ;
un amplificateur (164) ; et
un convertisseur analogique-numérique (166),
dans lequel l'I²C est en communication électronique avec le comparateur de résistance par l'intermédiaire du filtre passe-bas, de l'amplificateur, et du convertisseur analogique-numérique.

10. Système électronique de détection (100) selon une quelconque revendication précédente, dans lequel le système sur une puce (130) comprend en outre :
un dispositif de communication (136) configuré pour signaler un signal sans fil (202), facultativement :
dans lequel le signal sans fil est Bluetooth et/ou dans lequel le dispositif de communication est configuré en outre pour transmettre la concentration en gaz cible à un dispositif externe via le signal sans fil.

11. Système électronique de détection (100) selon la revendication 5, comprenant en outre :
une thermistance (180) configurée pour mesurer une température externe, dans lequel le système sur la puce (130) est configuré pour ajuster la température interne en réponse à la température externe.

12. Système électronique de détection (100) selon une quelconque revendication précédente, dans lequel le gaz cible est l'éthylène.

13. Procédé de détection d'un gaz cible utilisant le système électronique de détection (100) selon une quelconque revendication précédente, le procédé comprenant les étapes consistant à :
détecter une résistance d'un capteur de gaz cible (192) ;
détecter une résistance d'un potentiomètre numérique (160) ;
ajuster la résistance du potentiomètre numérique à une première résistance de façon que la première résistance du potentiomètre numérique corresponde à la résistance du capteur de gaz cible ;
détecter une résistance d'un capteur de référence (194) ;
ajuster la résistance du potentiomètre numérique à une seconde résistance de façon que la seconde résistance du potentiomètre numérique corresponde à la résistance du capteur de gaz cible ; et
déterminer la concentration en gaz cible en réponse à la première résistance et à la seconde résistance.

14. Procédé selon la revendication 13, dans lequel, avant la détermination, le procédé comprend en outre les étapes consistant à :
détecter une humidité interne en utilisant un capteur d'humidité (152) ; et
ajuster la première résistance et la seconde résistance en réponse à l'humidité interne pour compenser l'humidité interne, et/ou
détecter une température interne en utilisant un capteur de température (154); et
ajuster la première résistance et la seconde résistance en réponse à la température interne pour compenser la température interne.

15. Procédé selon la revendication 13 ou 14, dans lequel, avant la détermination, le procédé comprend en outre les étapes consistant à :
détecter une humidité interne en utilisant un capteur d'humidité (152) ;
détecter une température interne en utilisant un capteur de température (154); et
ajuster la première résistance et la seconde résistance en réponse à l'humidité interne et à la température interne pour compenser l'humidité interne et la température interne.
